# EUROPÄISCHE PATENTSCHRIFT

(11) **EP 0 615 986 B1**
(45) Veröffentlichungstag und Bekanntmachung des Hinweises auf die Patenterteilung: **13.01.1999**
(21) Anmeldenummer: 94103419.1
(22) Anmeldetag: 07.03.1994
(51) Int. Cl.: C08G 16/00, C08G 8/28, C09D 11/10

(54) **Mit Phenolharz modifizierte Naturharzsäureester, Verfahren zu ihrer Herstellung und ihre Verwendung in Druckfarben**
Phenolic resins of esterified rosin acids, process for their preparation and their application in printing inks
Résines phénoliques à base d'esters d'acides résiniques naturels, procédé pour les préparer et leur utilisation dans des encres d'imprimerie

(30) Priorität: 15.03.1993 DE 4308109
(43) Veröffentlichungstag der Anmeldung: 21.09.1994
(73) Patentinhaber: HOECHST AKTIENGESELLSCHAFT, 65926 Frankfurt am Main (DE)
(72) Erfinder: Bender, Albert, Dr., D-55130 Mainz (DE)
(74) Vertreter: Zounek, Nikolai, Dipl.-Ing.

(56) Entgegenhaltungen:
- EP-A- 0 065 268
- EP-A- 0 214 526
- DE-A- 2 150 216
- FR-A- 2 488 613
- US-A- 4 574 057
- US-A- 4 857 624

## Beschreibung

Die Erfindung betrifft neue, öllösliche, Phenolharz-modifizierte Naturharzsäureester, die hohe Molekulargewichte und daher hohe Lösungsviskositäten in Mineralöl bei noch guter Verträglichkeit aufweisen, sowie ein Verfahren zu ihrer Herstellung aus Naturharzen, Phenolen, Aldehyden, Veresterungs- und Modifizierungsmitteln, wobei sich dieses Verfahren durch kurze Reaktionszeiten auszeichnet. Die neuen Verbindungen können vorteilhaft als Bindemittelharze für Offsetdruckfarben verwendet werden.

Offsetdruckfarben können bekanntlich durch Pigmentieren eines Firnisses hergestellt werden, wobei der Firnis durch Auflösen geeigneter Bindemittelharze in Mineralöl unter Zusatz verschiedener Hilfsstoffe gewonnen werden kann. Als Hilfsstoffe kommen beispielsweise vegetabilische Öle, Alkydharze, Wachse und gegebenenfalls weitere Additive zur Verbesserung der Bindemitteleigenschaften, beispielsweise des Glanzes und der Scheuerfestigkeit des Druckfilms, in Frage. Das Bindemittelharz hat dabei die Aufgabe, das Pigment auf dem Bedruckstoff zu verankern. Die Entwicklung besonders schnell laufender Druckmaschinen und der Trend, neben gestrichenen Papieren in erhöhtem Maß auch nichtgestrichene Papiere mit erhöhter Saugfähigkeit zu bedrucken, stellt besonders hohe Anforderungen an die Qualität dieser Bindemittelharze. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verschlechterter Scheuerfestigkeit einhergeht. Es ist bekannt, daß Bindemittelharze mit hohem Molekulargewicht von Vorteil sind, da sie vermindertes Wegschlageverhalten in den Bedruckstoff aufweisen. Werden Bindemittelharze auf Naturharzsäure-Basis verwendet, so müssen sie zum Molekulargewichtsaufbau in geeigneter Weise modifiziert werden (s. z. B. EP-A 0 548 506). Bekanntlich ist es nicht ausreichend, die Naturharzsäuren nur mit Polyolen umzusetzen, da die erhaltenen Molekulargewichte für die vorteilhafte Anwendung noch zu niedrig sind. Eine Erhöhung kann jedoch erreicht werden, wenn zusätzlich mit Phenol-Aldehyd-Kondensationsprodukten modifiziert wird. Dem Stand der Technik entsprechend wird jedoch eine weitere Verbesserung erzielt, wenn vor der Modifizierung mit Phenolharz die Naturharzsäuren mit α,β-ethylenisch ungesättigten Carbonsäuren oder deren Anhydriden umgesetzt werden. Bekannt sind beispielsweise Fumarsäure, Maleinsäure, Maleinsäureanhydrid, Itakonsäure, Zimtsäure, Acrylsäure oder Methacrylsäure. Bevorzugt wird Maleinsäureanhydrid verwendet. Dabei werden bei der Umsetzung mit dem Naturharz die darin enthaltenen monofunktionellen Säuren, wie z.B. die Pimar-, Abietin- und Neoabietinsäure, in eine Säure mit drei Säurefunktionen, die sogenannte Maleopimarsäure, umgewandelt. Diese ist nun für die Vernetzung mit Polyolen, die zu hohen Molekulargewichten führt, besonders gut geeignet. Voraussetzung für den Molekulargewichtsaufbau ist allerdings eine möglichst weitgehende Umsetzung der Säuregruppen. Typischerweise werden Säurezahlen angestrebt, die unter 25 mg KOH/g Harz liegen. Bekanntermaßen sind für diese Polykondensationsreaktion dann relativ lange Reaktionszeiten bei hohen Temperaturen erforderlich, was für die technische Herstellung wegen der geringen Zeitausbeute nachteilig ist. Es ist ein weiterer Nachteil, daß durch die ungesättigten Carbonsäuren in das Bindemittelharz zusätzliche polare Gruppen eingeführt werden, die die erwünschte Verträglichkeit mit dem der Farbe zugrundeliegenden Mineralöl herabsetzen können. Um zu vermeiden, daß das Bindemittelharz dann aus der Lösung ausfällt, können Löslichkeitsvermittler, beispielsweise vegetabilische Öle oder Alkydharze oder langkettige, hochsiedend e Alkohole mitverwendet werden. Zusätze dieser Art können aber andererseits zu nachteiligen Trocknungsverzögerungen im Druckfilm führen.

Aus der DE-A-21 50 216 ist bekannt, modifizierte Naturharzprodukte aus Naturharz, ungesättigten Monomeren und Phenolharzen herzustellen, wobei diese Produkte durch Umsetzung mit 1.66 bis 11.6 Gew.-% Magnesiumoxid als Resinat gewonnen werden.

Der vorliegenden Erfindung lag somit die Aufgabe zugrunde, Kunstharze verfügbar zu machen, die ohne die Mitverwendung von α,β-ethylenisch ungesättigten Carbonsäure-Derivaten hergestellt werden, trotzdem ein hohes Molekulargewicht und daher hohe Lösungsviskositäten bei noch guter Mineralölverträglichkeit aufweisen und eine nur kurze Reaktionszeit zu ihrer Herstellung benötigen.

Es wurde nun überraschenderweise gefunden, daß man Kunstharze, die diese Eigenschaften besitzen und die sich als Bindemittelharze zur Herstellung von Offsetdruckfarben eignen, dadurch erhalten kann, daß man bei der Herstellung von Offsetdruckfarbenharzen auf der Basis von Phenolharz-modifizierten Naturharzsäureestern als Katalysator für die Resolbildung aus Phenolen und Aldehyden in der Naturharzschmelze sowie für die Naturharzsäureveresterung Magnesiumverbindungen verwendet und das bei der Kondensationsreaktion und der Naturharzsäureveresterung entstehende Wasser durch azeotrope Destillation unter Mitverwendung eines zur Azeotropbildung mit Wasser befähigten inerten organischen Lösungsmittels entfernt. Die hierbei resultierenden Kunstharze zeigen hohe Lösungsviskositäten und gute Mineralölverträglichkeiten und lassen sich in wesentlich kürzerer Reaktionszeit als vergleichbare, mit α,β-ethylenisch ungesättigten Carbonsäurederivaten modifizierte, herstellen.

Gegenstand der Erfindung sind daher Phenolharz-modifizierte Naturharzsäureester, die hohe Lösungsviskositäten in Mineralöl bei noch guter Verträglichkeit aufweisen und sich in kurzen Reaktionszeiten herstellen lassen durch Umsetzung von mindestens jeweils einer Verbindung aus den Substanzgruppen
A) Naturharze oder Naturharzsäuren,
B) einkernige oder mehrkernige alkylolisierbare Phenole,
C) Aldehyde oder Aldehydacetale und
D) aliphatische, cyclo-aliphatische oder araliphatische Alkohole mit mindestens zwei Hydroxylgruppen in Gegenwart von
E) 0,01 bis 1 Gew.-%, berechnet als MgO, Magnesiumverbindungen sowie gegebenenfalls Verbindungen aus den Substanzgruppen
F) Fettsäuren oder Fettsäureverbindungen und
G) ethylenisch ungesättigte Kohlenwasserstoffharze
bei einer Temperatur von 100 bis 250 °C und anschließende azeotrope Abdestillation des Wassers mittels eines Schleppmittels bei 200 bis 300 °C.

Bei der Herstellung der neuen Phenolharz-modifizierten Naturharzsäureester ist es besonders wichtig, daß in der ersten Verfahrensstufe eine Magnesiumverbindung als Kondensationskatalysator verwendet und in der zweiten Verfahrensstufe ein bei der Reaktionstemperatur zur azeotropen Destillation von Wasser befähigtes inertes organisches Lösungsmittel als Schleppmittel zur azeotropen Destillation des Reaktionswassers verwendet und das Reaktionswasser durch kontinuierliche azeotrope Destillation aus dem Reaktionsgemisch ausgekreist und eliminiert wird. Nur die Kombination beider Maßnahmen führt überraschenderweise zur Molekulargewichts- und Viskositätssteigerung des Bindemittelharzes sowie z ur Verkürzung dessen Reaktionszeit, wogegen bei der Einzelanwendung von jeweils nur einer dieser Maßnahmen die erfindungsgemäße Aufgabe nicht gelöst wird. Bei der kombinierten erfindungsgemäßen Anwendung der Azeotropdestillation unter Verwendung der erwähnten Metallverbindungen wird demzufolge offensichtlich ein synergistischer Effekt erzielt, der weder bekannt noch vorhersehbar und deshalb in hohem Maße überraschend und unerwartet war.

Der Anteil der einzelnen Komponenten, einschließlich des Schleppmittels, bezogen auf die Gesamtmenge aller Komponenten, beträgt vorzugsweise
20 bis 80 Gew.-%, vorzugsweise 30 bis 75 Gew.-%, insbesondere 35 bis 60 Gew.-%, Naturharze oder Naturharzsäuren aus der Substanzgruppe A),
10 bis 45 Gew.-%, vorzugsweise 15 bis 40 Gew.-%, insbesondere 20 bis 35 Gew.-%, phenolische Komponenten aus der Substanzgruppe B) und
2 bis 20 Gew.-%, vorzugsweise 3 bis 10 Gew.-%, insbesondere 5 bis 8 Gew.-%, Aldehydkomponenten aus der Substanzgruppe C)
oder gegebenenfalls anstelle der Komponenten aus den Substanzgruppen B) und C) oder anteilig mit diesen
bis zu 65 Gew.-% von aus Verbindungen der Substanzgruppen B) und C) separat hergestellten Kondensationsprodukten in einer Phenolresolform
1 bis 20 Gew.-%, vorzugsweise 3 bis 15 Gew.-%, insbesondere 4 bis 10 Gew.-%, Polyolkomponenten aus der Substanzgruppe D),
0,01 bis 1 Gew.-%, vorzugsweise 0,3 bis 1 Gew.-%, insbesondere 0,4 bis 0,8 Gew.-%, berechnet als MgO, Magnesiumverbindungen aus der Substanzgruppe E),
0 bis 30 Gew.%, vorzugsweise 3 bis 15 Gew.-%, insbesondere 5 bis 10 Gew.-%, Fettsäurekomponenten aus der Substanzgruppe F),
0 bis 30 Gew.-%, vorzugsweise 1 bis 25 Gew.-%, insbesondere 2 bis 10 Gew.-%, Kohlenwasserstoffharzkomponenten aus der Substanzgruppe G) und
0,01 bis 20 Gew.-%, vorzugsweise 3 bis 15 Gew.-%, insbesondere 4 bis 10 Gew.-%, inertes Schleppmittel.

Als Verbindungen der Substanzgruppen A) bis G) kommen vorzugsweise in Frage:
A) Naturharze oder Naturharzsäuren, insbesondere Kolophonium (Baumharz), Wurzelharz, Tallharz, Naturharze, die teilweise hydriert, disproportioniert oder dimerisiert sind. Die Harze bzw. Harzsäuren zeigen gegebenenfalls eine Bromzahl (= aufgenommene Menge Brom in g pro 100 g Harz) im Bereich von vorzugsweise 200 bis 280 und eine Säurezahl im Bereich von vorzugsweise 100 bis 200 mg KOH/g Harz.
B) Einkernige oder mehrkernige Phenole, vorzugsweise solche, die gegenüber Oxoverbindungen mehrfachfunktionell sind, insbesondere Phenol, (C₁-C₁₂)-Alkylphenole, Aryl- oder Aralkylphenole, Kresole, 1,3,5-Xylenole, Isopropyl-, p-tert.-Butyl-, Amyl-, Oktyl-, Nonylphenol, Diphenylolpropan, Phenylphenol, Cumylphenol sowie Additionsprodukte aus Phenolen und ethylenisch ungesättigten Monomeren, vorzugsweise Styrol, α-Methylstyrol, α-Chlorstyrol, Vinyltoluol, Cyclopentadien. Bevorzugt sind mono- und bifunktionelle, insbesondere bifunktionelle, Phenole, bei denen eine oder zwei der ortho- oder para-Stellungen zur phenolischen OH-Gruppe am Benzolring reaktiv und zur Aldehydaddition befähigt sind. Auch trifunktionelle Phenole, beispielsweise Phenol oder tetrafunktionelle Phenole, beispielsweise Diphenylolpropan, sind verwendbar. Mit den besonders bevorzugten difunktionellen Phenolen, beispielsweise den Alkyl- und Aralkylphenolen, lassen sich sehr vorteilhaft die gewünschten Verträglichkeiten der erfindungsgemäßen Harze mit aliphatischen Kohlenwasserstoffen und Mineralölen erzielen. In gleicher Weise vorteilhaft wirken ferner die bekannten Umsetzungsprodukte aus trifunktionellen Phenolen mit ethylenisch ungesättigten Monomeren, so daß auch diese Umsetzungsprodukte bevorzugte Phenolkomponenten darstellen. Besonders bevorzugte difunktionelle Phenole sind tert.-Butyl-, Oktyl- und Nonylphenol. Andererseits lassen sich mit den tri- oder tetrafunktionellen Phenolen besonders hohe Molekulargewichte und damit hohe Lösungsviskositäten einstellen. Ihre Mitverwendung bei der Herstellung hochviskoser Bindemittelharze mit noch guter Mineralölverträglichkeit ist daher eine besonders bevorzugte Ausführungsform des erfindungsgemäßen Verfahrens. Sie werden dann in untergeordneten Anteilen zusammen mit mono- und/oder difunktionellen Phenolen eingesetzt, wobei der Anteil an tri- oder tetrafunktionellen Phenolen vorzugsweise nicht mehr als 40 Gew.-%, bezogen auf die Gesamtmenge der eingesetzten Phenole, betragen soll.
   In einer speziellen, weniger bevorzugten Ausführungsform ist es jedoch auch möglich, den Anteil an tri- oder tetrafunktionellen Phenolen zu steigern, ja sie sogar als alleinige Phenole in die erfindungsgemäße Reaktion einzusetzen. Es werden dann sehr hochmolekulare Bindemittelharze mit hoher Lösungsviskosität aber schlechter Mineralölverträglichkeit erhalten. Solche Bindemittelharze können jedoch z.B. nach Verkochung mit Leinöl als Überdrucklacke oder Glanzfirnisse verwendet werden.
C) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfural, Glyoxal, sowie aus Komponenten der Substanzgruppen B) und C) hergestellte Phenolresole.
   Das Molverhältnis der Phenolkomponente aus B) zur Aldehydkomponente aus C) kann für die Phenolresolbildung in weiten Grenzen variiert werden und liegt vorzugsweise im Bereich von 1 : 0,9 bis 1 : 4,5, insbesondere 1 : 1 bis 1 : 3,5.
   Überschüssiger oder nicht umgesetzter Aldehyd wird aus dem Reaktionsgemisch, vorzugsweise destillativ, entfernt. Durch die Natur und die Menge der verwendeten Ausgangskomponenten für die Phenolresolharzbildung lassen sich Lösungsmittelviskosität und Mineralölverträglichkeit der als Endprodukte erhältlichen erfindungsgemäß hergestellten Phenolharz-modifizierten Naturharzsäureester auf bequeme Art beeinflussen bzw. steuern, wobei der Anteil an Phenolharzkomponenten in dem Endprodukt vorzugsweise bis zu 65 Gew.-%, bezogen auf das Endprodukt betragen kann.
   Die Phenolresolharzbildung kann auch separat nach bekannten Methoden aus Phenol und Aldehyden und basischen Katalysatoren bei Temperaturen zwischen 50 und 160°C, vorzugsweise 60 bis 100°C, bei Normaldruck oder erhöhtem Druck im Autoklaven durchgeführt und das Produkt dann der erfindungsgemäßen Naturharz- bzw. Naturharzsäureschmelze anstelle entsprechender Mengen Phenolkomponenten aus der Substanzgruppe B) und Aldehydkomponenten aus der Substanzgruppe C) zugesetzt werden. Bevorzugt ist jedoch die Phenolresolharzbildung aus Phenolkomponenten und Aldehydkomponenten in situ in der Naturharz- bzw. Naturharzsäureschmelze.
D) Es sind alle aus der Polyesterharzherstellung bekannten und mehrere Hydroxylgruppen enthaltenden Verbindungen als Veresterungsmittel verwendbar, vorzugsweise polyfunktionelle Alkohole. Besonders bevorzugt sind Glycerin, Trimethylolpropan und Pentaerythrit.
E) Als Kondensationskatalysatoren sind zwingend Magnesiumverbindungen erforderlich. Bevorzugt sind die Oxide und Hydroxide oder Salze von schwachen organischen Säuren, insbesondere die Carbonate, Bicarbonate, Acetate, Formiate, Oxalate.
   In untergeordneten Anteilen von bis zu maximal 1/3-Äquivalent, bezogen auf die Äquivalenzzahl der eingesetzten Magnesiumverbindung, können auch Zink- oder Calciumverbindungen mitverwendet werden. Bei alleiniger Verwendung von Calcium- oder Zinkverbindungen ohne die gleichzeitige Mitverwendung von Magnesiumverbindungen können die bei der Harzherstellung durch Azeotropdestillation resultierenden Endprodukte Veränderungen erfahren, die nicht mehr zu erfindungsgemäßen Produkten führen. Beispielsweise erfahren sie eine nur ungenügende Molekulargewichts- und Viskositätssteigerung oder es werden Produkte mit zu schlechter Mineralölverträglichkeit erhalten. Diese Unterschiede in der Wirksamkeit der unterschiedlichen Metallverbindungen, die üblicherweise bei der Bindemittelharzherstellung für Druckfarben verwendet werden, sowie deren Einfluß auf den Aufbau der Polykondensate sind außerordentlich überraschend.
F) Als Fettsäuren werden vorzugsweise tierische, pflanzliche oder durch Raffination gewonnene Fettsäuren oder Fettsäureverbindungen verwendet. Die Jodzahl (= aufgenommene Menge Jod in g pro 100 g Fett) dieser Verbindungen kann vorzugsweise bis zu 150 betragen, so daß nichttrocknende, halbtrocknende und trocknende Öle und Fette in Frage kommen.
   Der Anteil der an der erfindungsgemäßen Harzsynthesereaktion gegebenenfalls teilnehmenden Fettsäurekomponenten, bezogen auf die bei der Harzsynthese resultierenden erfindungsgemäßen Endprodukte, kann vorzugsweise bis zu 30 Gew.-% betragen. Bevorzugte Fettsäurekomponenten sind z.B. hydriertes Kokosfett, Kokosfett, Palmöl, Sheabutter, Japanwachs, Erdnußöl, Olivenöl, Sulfuröl, Rizinusöl, Reisöl, Baumwollsaatöl, Maisöl, Rüböl, Sojabohnenöl, Leinöl, Sonnenblumenöl, Holzöl, Talg, Walrat, Tran, Wollfett, Raffinationsfettsäuren, Tallöl oder dehydratisiertes Rizinusöl, epoxidiertes Sojaöl, polymerisierte Öle, wie z.B. die sog. Leinölstandöle, dimerisierte oder trimerisierte Fettsäuren, Hydroxystearinsäure, Isononansäure oder Gemische aus diesen Komponenten.
G) Als ethylenisch ungesättigte Kohlenwasserstoffharze eignen sich vorzugsweise solche, deren Makromoleküle Isopren-, Cyclopentadien-, Dicyclopentadien-, Cumaron-, Inden- sowie Styrol-Einheiten enthalten. Ihre erfindungsgemäße Mitverwendung bei der Harzsynthese dient gegebenenfalls der Beeinflussung der erfindungsgemäßen Endprodukte hinsichtlich einer geringeren Wasseraufnahme damit formulierter Farben, wobei die Kohlenwasserstoffharze gegebenenfalls in Mengen von vorzugsweise bis zu 30 Gew.-%, bezogen auf das Endprodukt, mitverwendet werden. Es ist auch möglich, die Verbindungen der Substanzgruppe G) oder ihre Monomeren in Form von Copolymerisaten mit den Verbindungen der Substanzgruppe A) einzusetzen.
   Die Herstellung der erfindungsgemäßen Produkte erfolgt in zwei Stufen. In der ersten Stufe wird eine Mischung der Komponenten A) bis E), gegebenenfalls zusammen mit Komponenten F) und G) bei einer Temperatur von 100 bis 250 °C, vorzugsweise 110 bis 160 °C umgesetzt, vorzugsweise bei einem Druck von 1 bis 10 bar, insbesondere 1 bis 5 bar.
   In der zweiten Reaktionsstufe wird das entstandene Reaktionswasser mit einem inerten Schleppmittel azeotrop abdestilliert. Als inerte Schleppmittel kommen vorzugsweise gesättigte aliphatische oder aromatische Kohlenwasserstoffe in Frage, deren Siedetemperaturen unter Normaldruck vorzugsweise oberhalb von 100°C liegen, beispielsweise Alkane, insbesondere Hexan, Dekan, Gemische von aliphatischen Kohlenwasserstoffen, wie sie beispielsweise in Benzin vorliegen oder in entsprechenden Mineralölfraktionen, ferner vorzugsweise Toluol oder Xylol. Das Schleppmittel wird vorzugsweise über ein Einleitungsrohr am Boden des Reaktionsgefäßes dem Reaktionsgemisch zugesetzt. Geringe Mengen Schleppmittel können bereits auch in der ersten Stufe des Syntheseverfahrens zugesetzt werden, um die Schmelzviskosität der Ausgangskomponenten zu erniedrigen. Vorzugsweise wird die gesamte Schleppmittelmenge spätestens beim Erreichen einer Reaktionstemperatur von 200°C zugesetzt. Die Azeotropdestillation wird bei Temperaturen von 200 bis 300 °C, vorzugsweise 220 bis 270 °C, insbesondere 240 bis 260 °C und bei einem Druck von 1 bis 10 bar durchgeführt. Besonders bevorzugt ist die Ausführung bei Normaldruck.
   Es ist besonders wichtig, daß mittels dieser Schleppmittel das bei der Kondensationsreaktion entstehende Reaktionswasser kontinuierlich und vollständig durch azeotrope Destillation aus dem Reaktionsgemisch entfernt wird, wobei das Schleppmittel vorzugsweise im Kreislauf geführt wird, und daß nach Beendigung der Wassereliminierung das Schleppmittel wieder aus dem Reaktionsgemisch abdestilliert wird. Falls diese Bedingung der fortlaufenden und ausschließlich azeotropen Auskreisung des Reaktionswassers nicht konsequent erfüllt wird, können die erwünschten Eigenschaften des Endproduktes sowie der Vorteil der Verkürzung der Reaktionszeit teilweise oder vollständig verloren gehen.
   Bei dem Syntheseverfahren wird der Fortgang der Kondensationsreaktion anhand der Säurezahl des Reaktionsgemisches verfolgt. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung und azeotroper Wasserauskreisung fortlaufend ab und die Veresterungsreaktion wird solange fortgesetzt, bis die erfindungsgemäße Umsetzung das gewünschte Endstadium erreicht hat und die Säurezahl auf Werte von < 50, vorzugsweise < 30 mg KOH/g Harz abgesunken ist. Danach wird das Schleppmittel durch Destillation, zuletzt unter Vaku um, aus dem Reaktionsprodukt entfernt. Dies erfolgt im allgemeinen zunächst bei Normaldruck und am Ende unter Vakuum bei Drucken zwischen 1000 und 0,1 mbar, vorzugsweise 200 bis 50 mbar, und Temperaturen bis zu 300 °C, vorzugsweise bis zu 280 °C. In manchen Fällen kann es auch vorteilhaft sein, das Schleppmittel oder Anteile davon in dem Endprodukt zu belassen, falls es sich problemlos in dem Endprodukt löst und dessen weitere Verwendung nicht stört oder beeinträchtigt. Dies kann vorzugsweise bei sehr hochmolekularen Harzen mit hohem Schmelzpunkt der Fall sein, deren Verarbeitbarkeit durch eine solche Maßnahme erheblich verbessert werden kann, indem ihre Schmelzviskosität und der Schmelzpunkt erniedrigt und eine raschere Löslichkeit in Mineralöl ermöglicht wird.
   Die erfindungsgemäßen Harze können auch nach den eigentlichen Reaktionen weiter bearbeitet werden, indem zusätzliche Verbindungen hinzugefügt werden.
   Beispielsweise ist die Verdünnung der Harzschmelze mit Mineralöl möglich, wobei alle Möglichkeiten vom festen über einen flüssigen Harz-Mineralöl-Firnis bis zur Lösung gegeben sind. Die Harze können mit Mineralölen in einem Verhältnis von 1 Teil Harz zu 99 Teilen Mineralöl bis 99 Teile Harz zu 1 Teil Mineralöl verdünnt werden. Andererseits ist es aber auch möglich, zur Optimierung angestrebter Lösungsviskositäten oder Verträglichkeiten niedermolekulare Verbindungen, wie Kolophonium, Kolophoniumester, vegetabile Öle oder Polymere, wie Alkydharze, Phenolharze, Polystyrol oder Mischungen davon, hinzuzufügen.

Die Herstellung der erfindungsgemäßen Bindemittelharze durch Azeotropdestillation in Kombination mit Magnesiumverbindungen als Kondensationskatalysatoren kann im Vergleich zum Verfahren des Stands der Technik eine Verzehnfachung des Molekulargewichts, eine Steigerung der Viskosität um das zweihundertfache und eine Halbierung der Reaktionszeit bewirken. Werden Bindemittelharze nach Verfahren des Standes der Technik durch Modifizieren mit α,β-ethylenisch ungesättigten Carbonsäure-Derivaten hergestellt, die vergleichbare anwendungstechnische Eigenschaften, wie beispielsweise Säurezahl, Molekulargewicht, Viskosität und Mineralölverträglichkeit, wie die Bindemittelharze des erfindungsgemäßen Verfahrens aufweisen, so benötigen letztere zu ihrer Herstellung eine deutlich erniedrigte Reaktionszeit. Diese kann bis zu 50 % unter der dieser mit den Säure-Derivaten modifizierten Produkte liegen. Darüberhinaus ist es sogar möglich, mit Hilfe des erfindungsgemäßen Verfahrens Bindemittelharze mit noch höherer Viskosität als sie jene Verbindungen aufweisen und in kürzerer Reaktionszeit als es dem bisherigen Stand der Technik entspricht, herzustellen. Diese Ergebnisse waren nicht vorhersehbar und sind deshalb außerordentlich überraschend. Die Herstellung der neuen erfindungsgemäßen Produkte im technischen Maßstab erweist sich somit als außerordentlich günstig, da sich sehr vorteilhafte Eigenschaften und Zeitausbeuten im Vergleich zum Stand der Technik ergeben.

Das Molekulargewicht der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Das Molekulargewicht (Gewichtsmittel M_{w}) der erfindungsgemäßen Harze liegt gemäß den erhaltenen Meßergebnisssen vorzugsweise bei Werten von M_{w} > 5000 und ist nach oben nicht kritisch begrenzt. Besonders bevorzugt liegen die Molekulargewichte M_{w} jedoch in einem mittleren Bereich zwischen 5000 und 100000, insbesondere 8000 bis 50000.

Die erfindungsgemäßen Harze weisen in Mineralöl eine gute Verträglichkeit auf. Zur Ermittlung der Mineralölverträglichkeit bzw. der Klarlöslichkeit in Mineralöl der erfindungsgemäßen Harze werden diese jeweils bei 180°C in standardisiertem Mineralöl (Siedebereich 240 bis 270°C, Anilinpunkt 72°C) zu 35 Gew.-%igen klaren Harzlösungen gelöst, die Lösungen auf 23°C abgekühlt und sogleich unter Rühren bis zum Auftreten einer Trübung (Trübungspunkt) mit dem gleichen Mineralöl titriert. Das am Trübungspunkt in der Lösung vorliegende Verhältnis von 1 Gewichtsteil Harz zu X Gewichtsteilen Mineralöl wird als Verträglichkeit bzw. Klarlöslichkeitsendpunkt bezeichnet.

Bei Verwendung anderer Mineralöle anstelle des hier verwendeten standardisierten Prüföls (= Mineralöl PKW F 4/7 der Fa. Haltermann, Siedebereich 240 bis 270°C, Anilinpunkt 72°C) können sich die bei der Mineralölverträglichkeit gefundenen Zahlenwerte ändern.

Zur Bestimmung der Viskositäten werden die 35 Gew.-%igen Mineralöllösungen oder die in analoger Weise herstellbaren Leinöllösungen mit einem üblichen Rotationsviskosimeter vermessen.

Weiterer Gegenstand der Erfindung ist die Verwendung der erfindungsgemäßen Harze als Bindemittelharze, vorzugsweise in Druckfarben für den Offsetdruck und den Buchdruck, wo sie insbesondere in Gelform als Gelfirnisse sehr vorteilhaft einsetzbar sind. Die Herstellung der Gelfirnisse erfolgt vorzugsweise durch Reaktion der Bindemittelharze mit Aluminiumverbindungen, Aluminiumalkoholat oder mit Acetessigester stabilisiertem Aluminiumalkoholat nach bekannten Verfahrensweisen in hochsiedendem Mineralöl. Die Gelfirnisse werden gegebenenfalls mit weiteren Bindemittelharzen, beispielsweise Phenolharz-modifizierten Kolophoniumharzen, vegetabilischen Ölen, Wachsen, Füllstoffen, Sikkativen und weiteren Zusatzstoffen vermischt und durch Pigmentierung die für den Offsetdruck und Buchdruck verwendbaren Druckfarben erhalten, die sich u.a. bei den in Druckmaschinen auftretenden Arbeitstemperaturschwankungen in einem sehr breiten Bereich weitgehend unempfindlich in ihrem Viskositätsverhalten zeigen und auch nicht unlöslich werden, was außerordentlich vorteilhaft ist.

Wegen ihrer guten Verträglichkeit mit Aliphaten sind die erfindungsgemäßen neuen Phenolharz-modifizierten Kolophoniumharze auch in Kombination mit niedrigsiedenden Benzinfraktionen einsetzbar, wie sie beispielsweise im Illustrationstiefdruck mit Benzin verwendet werden. Diese breite Einsetzbarkeit der neuen Verbindungen für derart unterschiedliche Druckverfahren, wie sie Offset-, Buch- und Tiefdruck darstellen, bedeutet einen ganz besonders wichtigen Vorteil. Weiterer Gegenstand der Erfindung ist daher die Verwendung der erfindungsgemäßen Harze als Bindemittelharze in Druckfarben für den Illustrationstiefdruck mit Benzin.

Die Erfindung wird durch die nachfolgenden Beispiele näher erläutert.

### Vergleichsbeispiel 1

### Nach bekannten Verfahren wird ein Bindemittelharz ohne Maleinsäureanhydrid unter Einwirkung von Magnesiumoxid hergestellt. Es wird ein niederviskoses Harz erhalten.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, 218 g Nonylphenol, 30 g Diphenylolpropan und 48 g Glycerin geschmolzen. In die 100 °C heiße Schmelze werden sodann 6 g Magnesiumoxid, was einem Gehalt von 0,67 Gew.-% bezogen auf die Gesamteinwaage entspricht, suspendiert in 30 ml Xylol, getropft und dann 68 g Paraformaldehyd eingetragen. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler durch einen absteigenden Kühler ersetzt und Wasser, Xylol und Harzöl abdestilliert. Dabei wird die Temperatur auf 250 °C gesteigert und der Fortgang der Reaktion anhand der Säurezahl des Produkts bestimmt. Sobald diese auf 25 mg KOH/g Harz gefallen ist, werden flüchtige Anteile im Vakuum bei 100 mbar abdestilliert. Nach Druckausgleich mit Stickstoff wird die Schmelze entleert, wobei nach dem Abkühlen 801 g eines spröden, pulverisierbaren Harzes erhalten werden. Es hat einen Erweichungspunkt von 125 °C. Eine 35%ige Lösung in Mineralöl des Siedebereichs 240 bis 270 °C und mit dem Anilinpunkt 72 °C hat eine Viskosität von 10 dPa•s, eine 35%ige Lösung in Leinöl 101 dPa•s. Eine Lösung von 1 Teil Harz in 10 Teilen des vorstehenden Mineralöls ergibt eine stabile, klare Lösung. Die Verträglichkeit des Harzes ist also besser als 1:10. Das durch Gelpermeationschromatographie ermittelte mittlere Molekulargewicht ergibt sich zu 10700. Die Reaktionszeit zur Herstellung beträgt 18 Stunden.

### Beispiel 1

### Herstellung eines erfindungsgemäßen Bindemittelharzes durch Azeotropdestillation mit der Rezeptur des Vergleichsbeispiels 1, wobei ein hochviskoses Produkt mit guter Mineralölverträglichkeit und verkürzter Reaktionszeit erhalten wird.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, 218 g Nonylphenol, 30 g Diphenylolpropan und 48 g Glycerin geschmolzen. In die 100 °C heiße Schmelze werden sodann 6 g Magnesium-oxid, was einem Gehalt von 0,67 Gew.-% bezogen auf die Gesamteinwaage entspricht, suspendiert in 30 ml Xylol, getropft und dann 68 g Paraformaldehyd eingetragen. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler mit einem Azeotropwasserabscheider kombiniert und Wasser im Umlauf mit Xylol abdestilliert. Dabei wird die Temperatur kontinuierlich auf 250 °C gesteigert, wobei bei Erreichen von 200 °C weitere 50 g Xylol zugegeben werden. Dabei wird Wasser ständig als Azeotrop mit Xylol abdestilliert. Der Fortgang der Reaktion wird anhand der Säurezahl des Produkts bestimmt. Sobald diese auf 25 mg KOH/g Harz gefallen ist, ist die Wasserabspaltung weitgehend beendet. Das in der Schmelze befindliche Lösungsmittel wird zunächst unter Normaldruck während 30 min abdestilliert. Flüchtige Anteile werden im Vakuum während 10 min bei 100 mbar abdestilliert. Nach Druckausgleich mit Stickstoff wird die Schmelze entleert, wobei nach dem Abkühlen 805 g eines spröden, pulverisierbaren Harzes erhalten werden. Es hat einen Erweichungspunkt von 125 °C. Eine 35%ige Lösung in Mineralöl des Siedebereichs 240 bis 270 °C und mit dem Anilinpunkt 72 °C hat eine Viskosität von 1790 dPa•s, eine 35%ige Lösung in Leinöl 2530 dPa•s. Eine Lösung von 1 Teil Harz in 10 Teilen des vorstehenden Mineralöls ergibt eine stabile, klare Lösung. Die Verträglichkeit des Harzes ist also besser als 1:10. Das durch Gelpermeationschromatographie ermittelte mittlere Molekulargewicht beträgt 35800. Die Reaktionszeit zur Herstellung beträgt 9 Stunden.

### Vergleichsbeispiel 2

### Herstellung eines Bindemittelharzes mit der Rezeptur und dem Verfahren des Beispiels 1, wobei Magnesiumoxid durch die äquivalente Menge Zinkoxid ersetzt wird. Es wird ein Produkt mit ungenügender Mineralölverträglichkeit und niedriger Viskosität erhalten.

Es werden 12 g Zinkoxid eingesetzt, was einem Gehalt von 1,34 Gew.-% bezogen auf die Gesamtrezeptur entspricht. Nach einer Reaktionszeit von 9 Stunden werden 803 g eines spröden, pulverisierbaren Harzes mit dem Erweichungsvon 122 °C und der Säurezahl von 28 mg KOH/g Harz erhalten. Eine 35%ige Lösung in Mineralöl des Siedebereichs 240 bis 270 °C und mit dem Anilinpunkt 72 °C hat eine Viskosität von 165 dPa•s. Eine Lösung von 1 Teil Harz in 2,5 Teilen des vorstehenden Mineralöls ergibt bei 23 °C eine trübe Lösung, die instabil ist. Das durch Gelpermeationschromatographie ermittelte mittlere Molekulargewicht beträgt 37100.

### Vergleichsbeispiel 3

### Herstellung eines Bindemittelharzes mit der Rezeptur des Beispiels 1, wobei Magnesiumoxid durch die äquivalente Menge Calciumoxid ersetzt wird. Es wird ein Produkt mit ungenügender Mineralölverträglichkeit erhalten.

Es werden 8,31 g Calciumoxid eingesetzt, was einem Gehalt von 0,93 Gew.-% bezogen auf die Gesamtrezeptur entspricht. Nach der Reaktionszeit von 9 Stunden werden 805 g eines spröden, pulverisierbaren Harzes mit dem Erweichungspunkt von 112 °C und der Säurezahl von 26 mg KOH/ g Harz erhalten. Eine Lösung von 1 Teil Harz in 1,5 Teilen des vorstehenden Mineralöls ergibt bei 23 °C bereits eine trübe Lösung, die instabil ist. Somit läßt sich auch eine bei 23 °C stabile 35%ige Lösung des Harzes im vorstehend verwendeten Mineralöl nicht herstellen. Das durch Gelpermeationschromatographie ermittelte mittlere Molekulargewicht beträgt 25000.
Das Harz ist für eine erfindungsgemäße Anwendung unbrauchbar.

### Beispiel 2

### Herstellung eines erfindungsgemäßen Bindemittelharzes durch Azeotropdestillation, wobei ein Resol und Benzin als Schleppmittel verwendet werden.

Nach bekannten Verfahren wird zunächst ein Resol aus 1860 g Nonylphenol, 1380 g 37%igem wäßrigem Formaldehyd und 513 g 33%iger Natronlauge in 850 g Xylol hergestellt. Die alkalische Lösung wird mit 470 g 50%iger Schwefelsäure neutralisiert und das Resol von der wäßrigen Phase befreit (Festkörper 68%, Viskosität bei 23 °C 200-300 mPa•s).

Dann werden in einem heizbaren 2l-Mehrhalskolben mit Rührwerk, Thermometer, Tropftrichter, absteigendem Kühler und Einfüllrohr unter einer Stickstoffatmosphäre 527 g handelsübliches Kolophonium, 48 g Glycerin und 6 g Magnesiumoxid auf 160 °C erhitzt. In die heiße Schmelze werden sodann innerhalb einer halben Stunde 505 g des Resols getropft, wobei Wasser abdestilliert. Dann wird die Temperatur auf 250 °C gesteigert, wobei bei Erreichen einer Temperatur von 200 °C der absteigende Kühler durch einen Wasserabscheider ersetzt und 50 g Benzin des Siedebereichs 140-200 °C über ein Einleitrohr, das bis auf den Boden des Reaktionsgefäßes reicht, eingeleitet wird. Dabei wird Wasser als Azeotrop mit dem Umlaufmittel abdestilliert. Der Fortgang der Reaktion wird anhand der Säurezahl des Produkts bestimmt. Sobald diese auf 25 mg KOH/g Harz gefallen ist und die Wasserabspaltung weitgehend beendet ist, wird das in der Schmelze befindliche Lösungsmittel zunächst unter Normaldruck während 30 min abdestilliert. Flüchtige Anteile werden im Vakuum während 10 min bei 100 mbar abdestilliert. Nach Druckausgleich mit Stickstoff wird die Schmelze entleert, wobei nach dem Abkühlen 825 g eines spröden, pulverisierbaren Harzes erhalten werden, das einen Erweichungspunkt von 125 °C besitzt. Eine 35%ige Lösung in Mineralöl des Siedebereichs 240 bis 270 °C und mit dem Anilinpunkt 72 °C hat eine Viskosität von 9 dPa·s, eine 35%ige Lösung in Leinöl 160 dPa•s. Eine Lösung von 1 Teil Harz in 10 Teilen des vorstehenden Mineralöls ergibt eine stabile, klare Lösung. Die Verträglichkeit des Harzes ist also besser als 1:10. Das durch Gelpermeationschromatographie ermittelte mittlere Molekulargewicht beträgt 9560. Die Reaktionszeit beträgt 7 Stunden.

In einer niedrigsiedenden Benzinfraktion vom Siedebereich 110 bis 125 °C, wie sie für den Tiefdruck mit Benzin zur Anwendung kommt, weist das Harz als 50 %ige Lösung bei 23 °C eine Viskosität von 760 mPa•s auf.

### Vergleichsbeispiel 4

### Herstellung eines Bindemittelharzes mit Maleinsäureanhydrid nach bekannten Verfahren, wobei ein hochviskoses Produkt mit guter Mineralölverträglichkeit erhalten wird, das jedoch eine lange Reaktionszeit benötigt.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium geschmolzen und bei 160 °C 31 g Maleinsäureanhydrid zugegeben. Nachdem die exotherme Reaktion abgeklungen ist, läßt man noch eine Stunde nachreagieren. Dann gibt man 71 g Pentaerythrit, 6 g Magnesiumoxid (entspricht einem Gehalt von 0,6 Gew.-% bezogen auf die Gesamtrezeptur) und 276 g Nonylphenol und in die auf 110 °C abgekühlte Mischung 68 g Paraformaldehyd zu. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler durch einen absteigenden Kühler ersetzt und Wasser und Harzöl abdestilliert. Dabei wird die Temperatur auf 270 °C gesteigert und der Fortgang der Reaktion anhand der Säurezahl des Produkts bestimmt. Sobald diese auf 25 mg KOH/g Harz gefallen ist, werden flüchtige Anteile im Vakuum bei 100 mbar während einer Stunde abdestilliert. Nach Druckausgleich mit Stickstoff wird die Schmelze entleert, wobei nach dem Abkühlen 845 g eines spröden, pulverisierbaren Harzes erhalten werden. Es hat einen Erweichungspunkt von 137 °C und eine Säurezahl von 19 mg KOH/g Harz. Eine 35%ige Lösung in Mineralöl des Siedebereichs 240 bis 270 °C und mit dem Anilinpunkt 72 °C hat eine Viskosität von 425 dPa•s , eine 35%ige Lösung in Leinöl 760 dPa•s. Die Mineralölverträglichkeit mit dem vorstehend verwendeten Öl beträgt 1 : 7,5. Das durch Gelpermeationschromatographie bestimmte mittlere Molekulargewicht beträgt 28400, die Reaktionszeit zur Herstellung 18 Stunden.

### Beispiel 3

### Herstellung eines erfindungsgemäßen Bindemittelharzes, das zusätzlich zum Naturharz mit einem Kohlenwasserstoffharz modifiziert ist.

Es wird gearbeitet wie in Beispiel 1 mit der Abänderung, daß statt 527 g Kolophonium ein Gemisch aus 475 g Kolophonium und 52 g eines handelsüblichen Cyclopentadienharzes eingesetzt wird. Das resultierende Produkt besitzt einen Erweichungspunkt von 120 °C und eine Säurezahl von 14 mg KOH/g Harz. Die Viskosität einer 35%igen Lösung in dem vorstehend verwendeten Mineralöl beträgt 1480 dPa•s, die einer 35%igen Leinöllösung 2270 dPa•s. Eine Lösung von 1 Teil Harz in 3 Teilen des Mineralöls ergibt eine stabile, klare Lösung. Die Verträglichkeit des Harzes ist also besser als 1:3. Das durch Gelpermeationschromatographie ermittelte mittlere Molekulargewicht beträgt 36200, die Reaktionszeit 8 Stunden.

### Beispiel 4

### Herstellung eines erfindungsgemäßen Bindemittelharzes, das zusätzlich zum Naturharz mit einem trocknenden vegetabilen Öl modifiziert ist.

Es wird gearbeitet wie in Beispiel 1 mit der Abänderung, daß zusätzlich zur Komponentenmischung 44 g Sojaöl vorgelegt werden. Das resultierende Produkt besitzt einen Erweichungspunkt von 120 °C und eine Säurezahl von 22 mg KOH/g Harz. Die Viskosität einer 35%igen Lösung in dem vorstehend verwendeten Mineralöl beträgt 34 dPa•s, die einer 35%igen Leinöllösung 295 dPa•s. Eine Lösung von 1 Teil Harz in 10 Teilen des Mineralöls ergibt eine stabile, klare Lösung. Die Verträglichkeit des Harzes ist also besser als 1:10. Das durch Gelpermeationschromatographie ermittelte mittlere Molekulargewicht beträgt 24520, die Reaktionszeit 8 Stunden.

### Beispiel 5

### Herstellung eines erfindungsgemäßen Bindemittelharzes, das zusätzlich zum Naturharz mit einem nichttrocknenden vegetabilen Öl modifiziert ist.

653 g chinesisches Kolophonium, 245 g Nonylphenol, 50 g Diphenylolpropan, 60 g Glycerin, 84 g Formaldehyd, 100 g hydriertes Kokosfett und 10 g Magnesiumoxid werden analog zu Beispiel 1 kondensiert. Nach 8 Stunden Reaktionszeit werden 1075 g Festharz vom Erweichungspunkt 115 °C und der Säurezahl 20 erhalten. Eine 35%ige Lösung des Harzes in Mineralöl des Siedebereichs 240 bis 270 °C und des Anilinpunktes 72 °C hat eine Viskosität von 647 dPa•s bei einer Verträglichkeit von besser als 1 Teil Harz zu 5 Teilen Mineralöl.

### Beispiel 6

### Herstellung eines erfindungsgemäßen Bindemittelharzes, das zusätzlich zum Naturharz mit einem Kohlenwasserstoffharz und einem vegetabilen Öl modifiziert ist.

Es wird gearbeitet wie in Beispiel 1 mit der Abänderung, daß statt 527 g Kolophonium ein Gemisch aus 475 g Kolophonium und 52 g eines mit Naturharz modifizierten Cyclopentadienharzes sowie 50 g Kokosfett eingesetzt werden. Das resultierende Produkt besitzt einen Erweichungspunkt von 115 °C und eine Säurezahl von 14 mg KOH/g Harz. Die Viskosität einer 35%igen Lösung in dem vorstehend verwendeten Mineralöl beträgt 1270 dPa.s, die einer 35%igen Leinöllösung 1840 dPa•s. Eine Lösung von 1 Teil Harz in 3 Teilen des Mineralöls ergibt eine stabile, klare Lösung. Die Verträglichkeit des Harzes ist also besser als 1:3. Das durch Gelpermeationschromatographie ermittelte mittlere Molekulargewicht beträgt 25300, die Reaktionszeit 8 Stunden.

### Beispiel 7

### Herstellung eines erfindungsgemäßen Bindemittelharzes mit Tallharz als Naturharzkomponente und Pentaerythrit als Veresterungsmittel

527 g amerikanisches Tallharz, 237 g Nonylphenol, 20 g Diphenylolpropan, 54 g Pentaerythrit, 68 g Paraformaldehyd und 6 g Magnesiumoxid werden analog zu Beispiel 1, aber bei einer Veresterungstemperatur von 260 statt 250 °C umgesetzt. Das resultierende Harz hat einen Schmelzpunkt von 130 °C und eine Säurezahl von 22 mg KOH/ g Harz. Eine 35%ige Lösung des Harzes im vorstehend beschriebenem Mineralöl weist eine Viskosität von 40 dPa•s auf. Die Verträglichkeit ist besser als 1 Teil Harz zu 10 Gew.-Teilen Mineralöl. Die Reaktionszeit zur Herstellung beträgt 9 Stunden.

### Beispiel 8

### Herstellung eines erfindungsgemäßen Bindemittelharzes, wobei die Resolbildung aus der Phenol- und der Aldehydkomponente unter Druck erfolgt

Eine 6l-Metallapparatur wird mit 2020 g geschmolzenem Kolophonium, 967 g Nonylphenol, 46 g Diphenylolpropan, 184 g Glycerin, 23 g Magnesiumoxid und 260 g Paraformaldehyd beschickt. Dann wird die Apparatur druckdicht verschlossen und das Reaktionsgut unter Rühren auf 140 °C erhitzt. Dabei stellt sich ein Druck von 2 bar ein. Nach zweistündiger Kondensation wird auf Normaldruck entspannt. Dann wird auf 200 °C erhitzt und dabei flüchtige Anteile abdestilliert. Bei Erreichen von 200 °C wird die Apparatur mit einem Wasserabscheider kombiniert, die Innentemperatur auf 250 °C geregelt und flüchtige Anteile mit Xylol azeotrop abdestilliert. Bei Erreichen einer Säurezahl von 25 mg KOH/ g Harz wird das Schleppmittel zunächst bei Normaldruck abdestilliert, und anschließend restliche flüchtige Anteile bei einem Druck von 50 mbar entfernt. Zur Herabsetzung der hohen Schmelzviskosität werden in die Harzschmelze 175 g eines hochsiedenden Mineralöls vom Siedepunkt 260 bis 290 °C eingerührt. Nach einer Reaktionszeit von 8 Stunden ist die Reaktion beendet, und die Apparatur wird entleert.

Das Harz besitzt einen Erweichungspunkt von 140 °C und eine Säurezahl von 23 mg KOH/g Harz. Die Viskosität einer 35%igen Lösung in Leinöl beträgt 1652 dPa•s, die einer 35%igen Lösung in Mineralöl des Siedebereichs 240 bis 270 °C 944 dPa•s. Eine Lösung von einem Teil Harz in 5 Teilen des vorstehenden Mineralöls ist bei 23 °C stabil.

### Beispiel 9

### Herstellung einer Farbe für den Offsetdruck

Aus
35 g Bindemittelharz des Beispiels 1
16 g Pigment Permanentrubin
5 g langöligem Alkydharz
44 g Mineralöl vom Siedepunkt 260 bis 290 °C
wurde nach üblichen Verfahren eine Druckfarbe hergestellt, mit der im Offsetverfahren Papier bedruckt wurde. Diese pastöse Farbe zeigte ein sehr gutes Druckverhalten. Sie besaß insbesondere ein sehr gutes Farbübertragungsverhalten, was zu einer sehr guten Druckschärfe und rasch trocknenden Drucken hohen Glanzes führte. Die Scheuerfestigkeit war ausreichend.

### Beispiel 10

### Herstellung einer Farbe für den Illustrationstiefdruck mit Benzin

Nach üblichen Verfahren wurde aus
25 g Bindemittelharz des Beispiels 2
9 g Pigment Permanentgelb
66 g Benzin des Siedebereichs 110 bis 130 °C
eine Farbe für den Illustrationstiefdruck mit Benzin hergestellt, mit der im Tiefdruckverfahren Papier bedruckt wurde. Diese flüssige Farbe zeigte ein gutes Druckverhalten und ergab rasch trocknende Drucke mit gutem Glanz.

## Patentansprüche

1. Phenolharz-modifizierte Naturharzsäureester, herstellbar durch Umsetzung von mindestens jeweils einer Verbindung aus den Substanzgruppen
A) Naturharze oder Naturharzsäuren,
B) einkernige oder mehrkernige alkylolisierbare Phenole,
C) Aldehyde oder Aldehydacetale und
D) aliphatische, cyclo-aliphatische oder araliphatische Alkohole mit mindestens zwei Hydroxylgruppen
in Gegenwart von
E) 0,01 bis 1 Gew.-%, berechnet als MgO, Magnesiumverbindungen sowie gegebenenfalls Verbindungen aus den Substanzgruppen
F) Fettsäuren oder Fettsäureverbindungen und
G) ethylenisch ungesättigte Kohlenwasserstoffharze
bei einer Temperatur von 100 bis 250 °C und anschließende azeotrope Abdestillation des Wassers mittels eines Schleppmittels bei 200 bis 300 °C.

2. Verfahren zur Herstellung von Phenolharz-modifizierten Naturharzsäureestern nach Anspruch 1 durch Umsetzung von
20 bis 80 Gew.-% Naturharze oder Naturharzsäuren aus der Substanzgruppe A),
10 bis 45 Gew.-% phenolische Komponenten aus der Substanzgruppe B),
2 bis 20 Gew.-% Aldehydkomponenten aus der Substanzgruppe C),
oder anstelle der Komponenten aus den Substanzgruppen B) und C) oder anteilig mit diesen aus Verbindungen der Substanzgruppen B) und C) separat hergestellte Kondensationsprodukte in einer Phenolresolform,
1 bis 20 Gew.-% Polyolkomponenten aus der Substanzgruppe D),
0,01 bis 1 Gew.-%, berechnet als MgO, Magnesiumverbindungen aus der Substanzgruppe E)
0 bis 30 Gew.% Fettsäurekomponenten aus der Substanzgruppe F),
0 bis 30 Gew.-% Kohlenwasserstoffharzkomponenten aus der Substanzgruppe G)
zusammen mit
0,01 bis 20 Gew.-% eines inerten Schleppmittels,
jeweils bezogen auf die Gesamtmenge der eingesetzten Komponenten.

3. Bindemittel für Druckfarben, enthaltend Umsetzungsprodukte gemäß Anspruch 1, die mit Mineralölen verdünnt sind in einem Verhältnis von 1 Teil Harz zu 99 Teilen Mineralöl bis 99 Teile Harz zu 1 Teil Mineralöl.

4. Bindemittel für Druckfarben, enthaltend Phenolharz-modifizierte Naturharzsäureester gemäß Anspruch 1, und Zusätze ausgewählt aus Kolophonium, Kolophoniumester, vegetabilen Ölen, Alkydharzen, Phenolharzen und Polystyrol.

5. Verwendung der Phenolharz-modifizierten Naturharzsäureester gemäß Anspruch 1 als Bindemittelharze in Druckfarben für den Offsetdruck und den Buchdruck.

## Claims

1. A phenolic-resin-modified natural resin acid ester, preparable by reaction of in each case at least one compound from the substance groups
A) natural resins or natural resin acids,
B) mononuclear or polynuclear alkylolizable phenols,
C) aldehydes or aldehyde acetals and
D) aliphatic, cycloaliphatic or araliphatic alcohols having at least two hydroxyl groups in the presence of
E) 0.01 to 1% by weight, calculated as MgO, of magnesium compounds
and if appropriate compounds from the substance groups
F) fatty acids or fatty acid compounds and
G) ethylenically unsaturated hydrocarbon resins at a temperature of 100 to 250°C and subsequent azeotropic removal of the water by distillation by means of an entraining agent at 200 to 300°C.

2. A process for the preparation of a phenolic-resin-modified natural resin acid ester as claimed in claim 1 by reaction of
20 to 80% by weight of natural resins or natural resin acids from substance group A),
10 to 45% by weight of phenolic components from substance group B),
2 to 20% by weight of aldehyde components from substance group C),
or, instead of the components from substance groups B) and C) or as a proportion with these, condensation products in a phenol-resol form prepared separately from compounds of substance groups B) and C),
1 to 20% by weight of polyol components from substance group D),
0.01 to 1% by weight, calculated as MgO, of magnesium compounds from substance group E),
0 to 30% by weight of fatty acid components from substance group F),
0 to 30% by weight of hydrocarbon resin components from substance group G) together with
0.01 to 20% by weight of an inert entraining agent,
in each case based on the total amount of the components employed.

3. A binder for printing inks comprising a reaction product as claimed in claim 1, which is diluted with mineral oil in a ratio of 1 part of resin to 99 parts of mineral oil, to 99 parts of resin to 1 part of mineral oil.

4. A binder for printing inks comprising a phenolic-resin-modified natural resin acid ester as claimed in claim 1, and additives chosen from colophony, colophony esters, vegetable oils, alkyd resins, phenolic resins and polystyrene.

5. The use of a phenolic-resin-modified natural resin acid ester as claimed in claim 1 as a binder resin in printing inks for offset printing and letterpress printing.

## Revendications

1. Esters d'acides résiniques naturels modifiés par des résines phénoliques, esters que l'on peut préparer par réaction à chaque fois d'au moins un composé pris dans le groupe des substances des
A) résines naturelles ou acides résiniques naturels,
B) phénols alkylolisables monocycliques ou polycycliques,
C) aldéhydes ou aldéhydes-acétals et
D) alcools aliphatiques, cycloaliphatiques ou araliphatiques avec au moins deux groupes hydroxyle,
en présence
E) de 0,01 à 1 % en poids, calculé sous forme de MgO, de composés de magnésium,
ainsi qu'éventuellement des composés pris dans le groupe de substances comportant des
F) acides gras ou composés d'acides gras et
G) résines hydrocarbonés à insaturation éthylénique à une température de 100 à 250 °C et par distillation azéotropique ultérieure de l'eau en utilisant un agent d'entraînement, à une température de 200 à 300 °C.

2. Procédé pour la préparation d'esters d'acides résiniques naturels modifiés par des résines phénoliques selon la revendication 1, par réaction de 20 à 80 % en poids de résines naturelles ou d'acides résiniques naturels pris dans le groupe des substances A),
de 10 à 45 % en poids de composants phénoliques pris dans le groupe des substances B),
de 2 à 20 % en poids de composants aldéhyde pris dans le groupe des substances C),
ou, au lieu des composants des groupes des substances B) et C) ou en proportion avec ceux-ci, avec des produits de condensation dans une forme de phénol-résol préparés à partir des composés des groupes des substances B) et C),
de 1 à 20 % en poids de composants polyol pris dans le groupe des substances D),
de 0,01 à 1 % en poids, calculé sous forme de MgO, de composés de magnésium pris dans le groupe des substances E),
de 0 à 30 % en poids de composants acides gras pris dans le groupe des substances F),
de 0 à 30 % en poids des composants résines hydrocarbonées pris dans le groupe des substances G), conjointement avec
de 0,01 à 20 % en poids d'un agent d'entraînement inerte,
à chaque fois par rapport au poids total des composants utilisés.

3. Liants pour encres d'imprimerie, contenant des produits de réaction selon la revendication 1, qui sont dilués par des huiles minérales dans un rapport de 1 part de résine à 99 parts d'huile minérale jusqu'à 99 parts de résine à 1 part d'huile minérale.

4. Liants pour encres d'imprimerie contenant des esters d'acides résiniques naturels modifiés par des résines phénoliques selon la revendication 1, et des additifs pris parmi la colophane, des esters de la colophane, des huiles végétales, des résines alkydes, des résines phénoliques et le polystyrène.

5. Utilisation des esters d'acides résiniques naturels modifiés par des résines phénoliques selon la revendication 1, comme liants dans des encres d'imprimerie pour l'impression offset et la typographie.
